# EUROPEAN PATENT APPLICATION

(11) **EP 4 415 450 A1**
(43) Date of publication of application: **14.08.2024**
(21) Application number: 21959974.3
(22) Date of filing: 08.10.2021
(51) Int. Cl.: H04W 72/04, H04W 48/10, H04W 48/16

(54) **TERMINAL, WIRELESS COMMUNICATION METHOD, AND BASE STATION**

(71) Applicant: NTT DOCOMO, INC., Tokyo 100-6150 (JP)
(72) Inventor: HARADA, Hiroki, Tokyo 100-6150 (JP); OKANO, Mayuko, Tokyo 100-6150 (JP); KURITA, Daisuke, Tokyo 100-6150 (JP); NAGATA, Satoshi, Tokyo 100-6150 (JP); OHARA, Tomoya, Tokyo 100-6150 (JP); OKAMURA, Masaya, Tokyo 100-6150 (JP)
(74) Representative: Hoffmann Eitle
(86) International application number: PCT/JP2021/037392
(87) International publication number: WO 2023/058235

(57) **Abstract**

A terminal according to one aspect of the present disclosure includes: a control section that uses a plurality of carriers for initial access; and a receiving section that receives at least one of a synchronization signal and a broadcast channel in at least one of the plurality of carriers. According to one aspect of the present disclosure, a plurality of carriers can be used efficiently.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Studies are made to improve frequency use efficiency in future radio communication systems (for example, Beyond 5G, 6G). For example, it is studied to regard a plurality of frequency carriers as one virtual cell.

However, existing restrictions may prevent efficient operation of resources and consequently degrade communication throughput.

Thus, an object of the present disclosure is to provide a terminal, a radio communication method, and a base station that allow efficient use of a plurality of carriers.

### Solution to Problem

A terminal according to one aspect of the present disclosure includes: a control section that uses a plurality of carriers for initial access; and a receiving section that receives at least one of a synchronization signal and a broadcast channel in at least one of the plurality of carriers.

### Advantageous Effects of Invention

According to one aspect of the present disclosure, a plurality of carriers can be used efficiently.

### Brief Description of Drawings

[FIG. 1] FIGS. 1A and 1B show examples of a configuration of a slot structure.
[FIG. 2] FIG. 2 shows an example of a structure of XDD.
[FIG. 3] FIGS. 3A and 3B show examples of a configuration of resources in the time domain and the frequency domain for XDD operation.
[FIG. 4] FIG. 4 shows an example of NR bands in FR1.
[FIG. 5] FIG. 5 shows an example of combinations of a TDD band and an SUL band in FR1.
[FIG. 6] FIGS. 6A to 6C show examples of a plurality of carriers in one existing serving cell.
[FIG. 7] FIGS. 7A to 7C show examples of a plurality of carriers in one serving cell according to a first embodiment.
[FIG. 8] FIGS. 8A to 8C show examples of initial access using a plurality of carriers in one serving cell according to a second embodiment.
[FIG. 9] FIG. 9 is a diagram to show an example of a schematic structure of a radio communication system according to one embodiment.
[FIG. 10] FIG. 10 is a diagram to show an example of a structure of a base station according to one embodiment.
[FIG. 11] FIG. 11 is a diagram to show an example of a structure of a user terminal according to one embodiment.
[FIG. 12] FIG. 12 is a diagram to show an example of a hardware structure of the base station and the user terminal according to one embodiment.
[FIG. 13] FIG. 13 is a diagram to show an example of a vehicle according to one embodiment.

### Description of Embodiments

### (Improvement of Frequency Use Efficiency)

Studies are made to improve frequency use efficiency (for example, increase efficiency of an existing frequency band) in future radio communication systems (for example, Beyond 5G, 6G). Concretely, an elastic (extensive, flexible, adaptive) cell, in which a plurality of frequency bands are regarded as one virtual cell, intra-carrier/inter-carrier cross-division duplex (XDD) in which a base station performs transmission and reception simultaneously, and the like are studied.

### (XDD)

LTE of Rel. 14 and previous versions has been put into practical use mainly for frequency division duplex (FDD) while also supporting time division duplex (TDD).

In contrast, NR of Rel. 15 and later versions has been studied mainly for TDD while supporting FDD at the same time (for example, LTE band migration and the like).

In FDD, this is preferable from the viewpoint of reduction of delay because DL reception and UL transmission can be performed simultaneously. In contrast, in FDD, the ratio between DL and UL resources is fixed (for example, 1:1).

In TDD, the ratio between DL and UL resources can be changed. For example, in a general environment where DL traffic is relatively heavy, the DL resource amount can be increased to improve DL throughput.

In contrast, in consideration of a time ratio of transmission and reception in time division duplex (TDD) in Rel. 16 or previous versions, a case with fewer transmission occasions of a UL signal/channel than reception occasions of a DL signal/channel is conceivable. In such a case, there is a concern that the UE cannot perform frequent transmission of a UL signal/channel, which delays transmission of an important UL signal/channel. It is also concerned that, since there are fewer UL transmission occasions than DL reception occasions, signals/channels are congested in the UL transmission occasions. In addition, in TDD, time resources in which a UL signal/channel can be transmitted are restricted. Hence, for example, application of a UL coverage enhancement technique using repetition transmission (Repetition) is also restricted.

For future radio communication systems (for example, Rel. 17/18 or later versions), it is studied to introduce a division duplex method combining TDD and frequency division duplex (FDD) for UL and DL.

The division duplex method may be referred to as an XDD (Cross Division Duplex). XDD may mean a duplex method in which DL and UL are frequency-division-multiplexed (DL and UL can be used simultaneously) in one component carrier (CC) or a plurality of CCs of a TDD band. XDD may mean that, when the duplex method is employed for a plurality of CCs, UL is available, in time resources where DL is available in a given CC, in another CC. The plurality of CCs may be CCs in the same band.

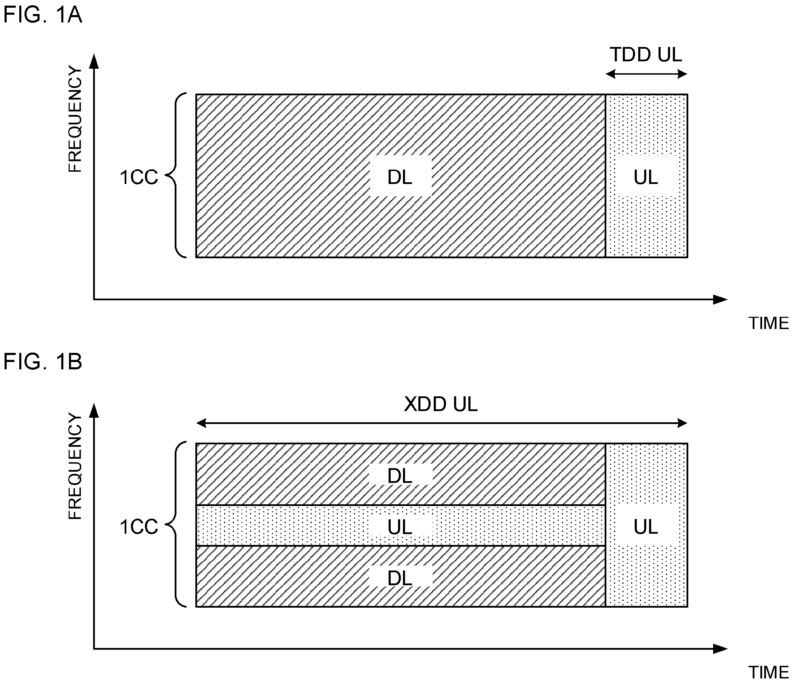

FIG. 1A is a diagram to show an example of a configuration of TDD defined in Rel. 16 or previous versions. In this example, TDD slots/symbols are configured for a UE in the bandwidth of one component carrier (CC) (which may be referred to as a cell and a serving cell).

In the example shown in FIG. 1A, the time ratio between a DL slot and a UL slot is 4:1. In such an existing slot/symbol configuration in TDD, UL time resources cannot be sufficiently secured, which may cause UL transmission delay and degrade coverage performance.

FIG. 1B is a diagram to show an example of a structure of XDD. In this example, resources used for DL reception and resources used for UL transmission overlap in terms of time in one component carrier (CC). With such a structure of resources, it is possible to secure UL resources and consequently improve use efficiency of resources.

For example, as in the example shown in FIG. 1B, by configuring both end resources of the frequency domain in one CC for DL to sandwich UL resources between the DL resources, occurrence of cross link interference (CLI) with neighbor carriers can be prevented and mitigated. A region for guard may be configured at one or more borders between the DL resources and UL resources.

By considering complexity of processing of self-interference, it is conceivable that only a base station uses DL resources and UL resources simultaneously. In other words, it may be configured that a given UE uses DL resources while another UE uses UL resources in resources where DL and UL overlap in terms of time.

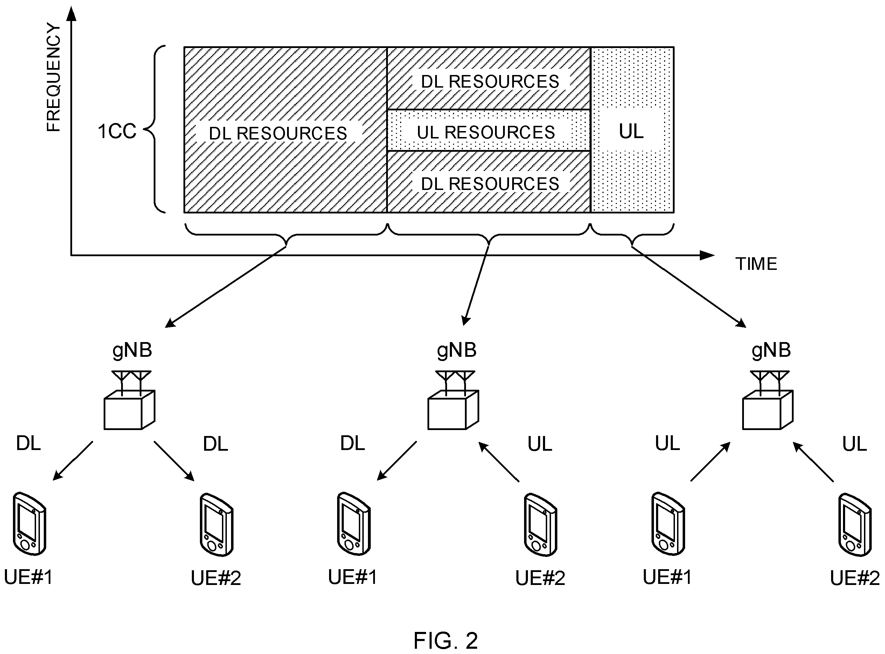

FIG. 2 is a diagram to show an example of a structure of XDD. In this example, it is configured that part of DL resources in a TDD band is assigned as UL resources so that DL and UL partially overlap in terms of time.

In this example, in a period for only DL, each of a plurality of UEs (UE #1 and UE #2 in this example) receives a DL channel/signal.

In the period where DL and UL overlap in terms of time, a given UE (UE #1 in this example) receives a DL channel/signal while another UE (UE #2 in this example) transmits a UL channel/signal. In this period, a base station performs simultaneous transmission and reception of DL and UL.

Moreover, in a period for UL only, each of a plurality of UEs transmits a UL channel/signal.

In existing NR (for example, those defined in Rel. 15/16 or previous versions), DL frequency resources and UL frequency resources in a carrier for UEs are configured as a DL bandwidth part (BWP) and a UL BWP, respectively. To switch DL/UL frequency resources to other DL/UL frequency resources, a configuration of a plurality of BWPs and a mechanism of adaptation of BWPs are needed.

In existing NR, time resources in a TDD carrier for UEs are configured as at least one of DL, UL, and flexible (FL) in a TDD configuration.

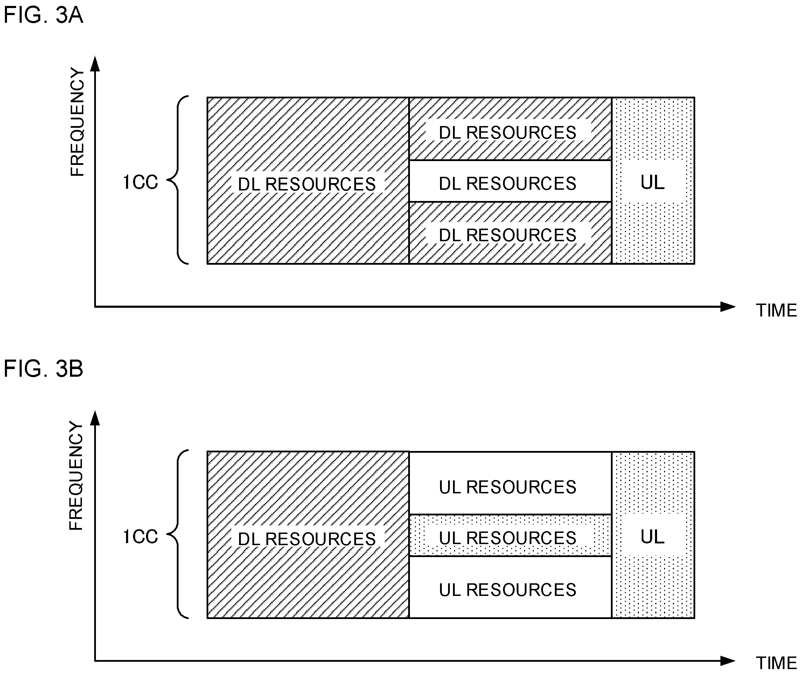

A method of configuring resources of the time domain and the frequency domain for XDD operation has been studied. For example, for UE #1 in FIG. 2, it is conceivable to configure resources in XDD (period where DL an UL overlap) while avoiding use of UL resources corresponding to the part used by other UEs (for example, UE #2) (refer to FIG. 3A).

For example, for UE #2 in FIG. 3, it is conceivable to configure resources in XDD while avoiding use of DL resources corresponding to the part used by other UEs (for example, UE #1) (refer to FIG. 3B).

### (Analysis)

In an elastic cell and inter-carrier XDD, a plurality of carriers are collectively regarded as one virtual cell and control and UL are performed only in a particular carrier among the plurality of carriers, to thereby be able to use the remaining carriers for data communication. In this way, low overhead can be achieved. A UE supporting carrier aggregation (CA) can perform control/UL only in a particular carrier by cross-carrier scheduling during RRC connection. However, a UE not supporting CA and a UE in initial access cannot perform control/UL only in a particular carrier.

A UE in NR of Rel. 17 or previous versions, cannot perform initial access by regarding a plurality of carriers as one cell except in supplementary uplink (SUL).

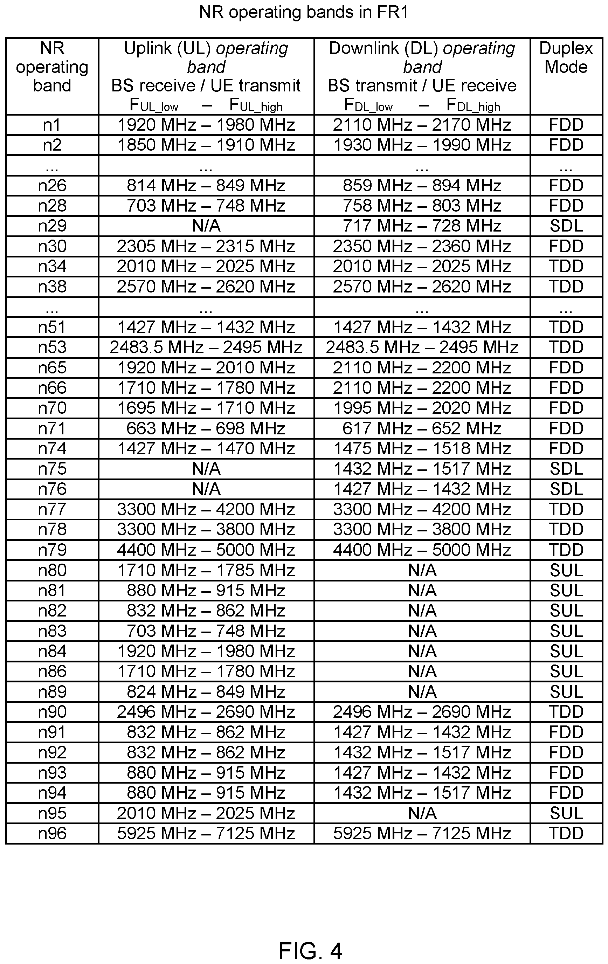

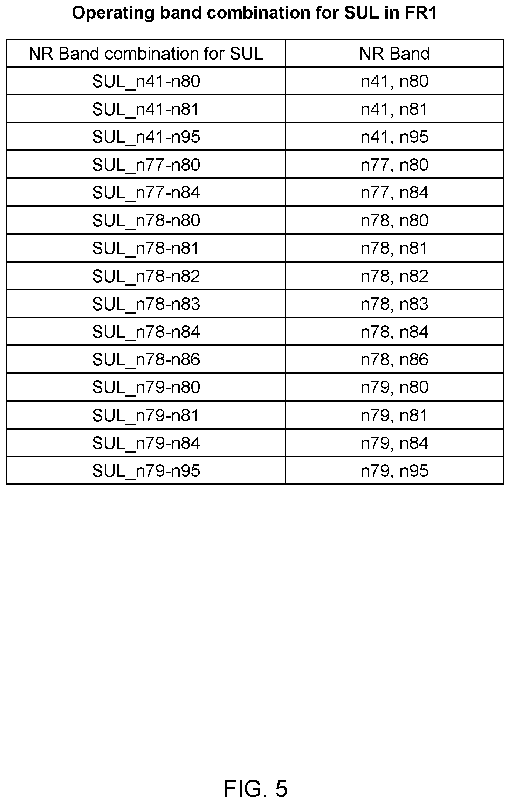

FIG. 4 shows an example of NR bands in FR1. In an existing specification, carriers/bands configurable as SUL are limited to part of bands. In FR1, bands for SUL are only NR bands n80 to n84, n86, and n89 (703 to 1980 MHz). FIG. 5 shows an example of combinations of a TDD band and an SUL band in FR1. For each SUL band, a combination only with a corresponding one of NR bands n41, n77 to n78 (2496 to 5000 MHz) for TDD is defined (for example, FIG. 5).

When the UE detects a synchronization signal block (SSB, SS / physical broadcast channel (PBCH) block), the UE reads a PDCCH that schedules system information block (SIB) 1 (SIB1 PDCCH) and a PDSCH carrying SIB1 (SIB1 PDSCH) in the frequency carrier of the synchronization signal block and performs a random access channel (RACH) procedure in the same frequency carrier, based on a BWP configuration included in SIB1.

If there is an SUL information element (supplementaryUplink) in a common serving cell configuration (servingCellConfigCommon), if the UE supports one or more frequency bands indicated in a frequency band list (frequencyBandList) for SUL, and if the UE supports an uplink channel bandwidth with a maximum transmission bandwidth configuration corresponding to a bandwidth larger than that of an initial uplink BWP of SUL, the UE regards that SUL is configured in the serving cell.

The common RACH configuration (RACH-ConfigCommon) may include a reference signal received power (RSRP) threshold (rsrp-ThresholdSSB-SUL) for selection from normal uplink (NUL) carrier and an SUL carrier. If a downlink pathloss reference RSRP is smaller than the threshold, the UE selects the SUL carrier for performing the random access procedure. Otherwise, the UE selects the NUL carrier for performing the random access procedure. Here, the frequency of the SUL carrier is lower than the frequency of the NUL carrier as described above.

An RA-RNTI associated with a PRACH occasion in which a random access preamble is transmitted is calculated by using a UL carrier ID (ul_carrier_id). The UL carrier ID indicates a UL carrier used for random access preamble transmission and is 0 for the NUL carrier while being 1 for the SUL carrier.

For an existing UE to use a DL carrier in which an SSB and SIB1 are transmitted and another UL carrier for initial access (RACH), either of configurations 1 and 2 below is needed.
{Configuration 1} A DL carrier and a UL carrier in an FDD band are associated (paired).
{Configuration 2} A UL carrier in an SUL band and a DL carrier in a TDD band are associated.

The SSB and SIB1 are transmitted in the same carrier.

Due to the above restrictions in NR of Rel. 17 or previous versions, there is a possibility of not being able to efficiently operate an elastic cell and inter-carrier XDD. In this case, communication throughput may degrade.

Thus, the inventors of the present invention came up with the idea of a method of treating a plurality of carriers collectively as one serving cell. According to one aspect of the present disclosure, it is possible to achieve efficient use of a plurality of bands / low overhead.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC CE), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, an SIB1 PDCCH, a Type0-PDCCH, a Type0-PDCCH common search space (CSS) set, and a PDCCH/DCI for scheduling of SIB1 may be interchangeably interpreted. In the present disclosure, SIB1, an SIB1 PDSCH, and a PDSCH scheduled by a Type0-PDCCH may be interchangeably interpreted.

In the present disclosure, a carrier, a frequency, a center frequency, a spectrum, and a BWP may be interchangeably interpreted. In the present disclosure, a UL and a normal uplink (NUL) may be interchangeably interpreted.

In the present disclosure, capability, UE capability, and a UE capability information may be interchangeably interpreted.

### (Radio Communication Method)

### <First Embodiment>

### <<UE Capability>>

Capability indicating supporting of use of a plurality of different carriers as DL/UL of one serving cell (new UE capability, new UE capability information) may be defined. The new UE capability may be defined as capability different from supporting of CA.

The new UE capability may be defined for at least one of a case where the plurality of carriers include a DL carrier and a UL carrier, a case where the plurality of carriers include a plurality of DL carriers, and a case where the plurality of carriers include a plurality of UL carriers.

The UE may process an HARQ-ACK collectively for the plurality of carriers in the one serving cell while processing an HARQ-ACK separately for each of a plurality of serving cells in CA. In this case, load of the UE can be reduced.

The plurality of carriers need not necessarily be a pair of a DL carrier and a UL carrier in one FDD band. The plurality of carriers may include DL/UL carriers having different center frequencies in one TDD band. The plurality of carriers may include one of a DL carrier and a UL carrier in one TDD band and a carrier in a different band.

The plurality of carriers may extend over a plurality of bands. The plurality of bands need not necessarily include an SUL band. The plurality of bands may include a plurality of FDD bands, may include one or more TDD bands, or may include bands of different duplex schemes (for example, one or more FDD bands and one or more TDD bands).

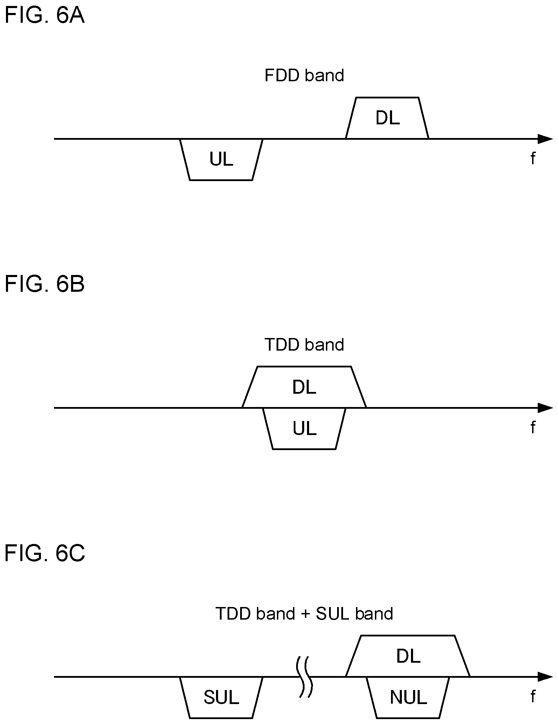

FIGS. 6A to 6C show examples of a plurality of carriers in one existing serving cell. One serving cell in the example in FIG. 6A includes a UL carrier and a DL carrier in one FDD band. One serving cell in the example in FIG. 6B includes a UL carrier and a DL carrier having the same center frequency in one TDD band. One serving cell in the example in FIG. 6C includes a NUL carrier and a DL carrier having the same center frequency in one TDD band and an SUL carrier in one SUL band.

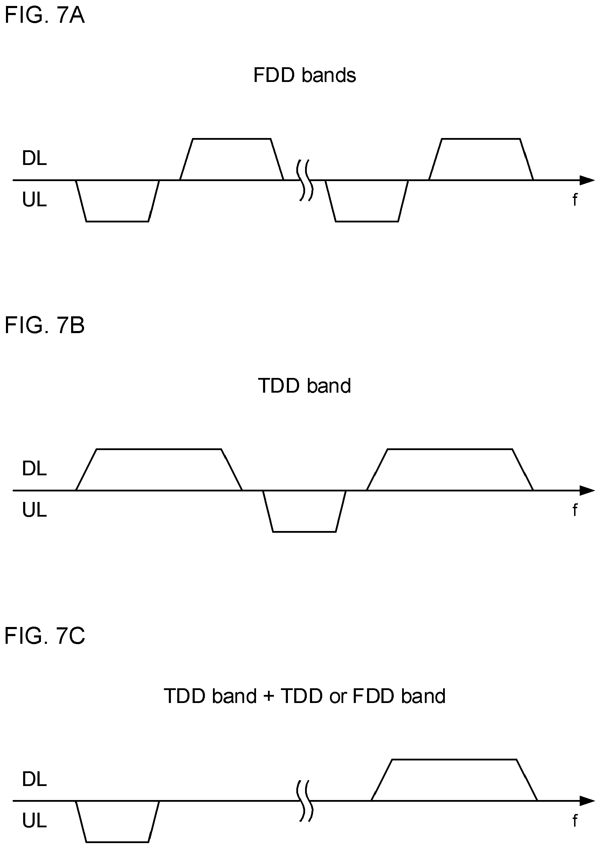

FIGS. 7A to 7C show examples of a plurality of carriers in one serving cell according to a first embodiment. As in the example in FIG. 7A, one serving cell may include UL/DL carriers in a plurality of FDD bands. As in this example, one serving cell may include a UL carrier and a DL carrier in a first FDD band and include a UL carrier and a DL carrier in a second FDD band. As in the example in FIG. 7B, one serving cell may include a UL carrier and DL carriers having different center frequencies in one or more TDD bands. Here, the number of UL carriers / DL carriers in one TDD band need not necessarily be one. As in this example, one serving cell may include two DL carriers and one UL carrier in one TDD band. As in the example in FIG. 7C, one serving cell may include UL/DL carriers in a plurality of bands, or the plurality bands may include a TDD band and the TDD band may include only one of a UL carrier and a DL carrier. As in this example, one serving cell may include one UL carrier in one TDD band and a DL carrier in a different band (for example, a TDD band or an FDD band).

In a serving cell, DL BWPs and UL BWPs of a plurality of different carriers may be configured. For a UE having new UE capability described above, DL BWPs and UL BWPs of the plurality of different carriers may be configured in the serving cell. Each DL/UL BWP may be configured by using an offset (for example, resource block (RB) offset) from an NR-Absolute Radio Frequency Channel Number (ARFCN, number in a global frequency raster) / pointA (common reference point on an RB grid) and a bandwidth (for example, the number of RBs).

The UE may report a combination of a plurality of DL/UL bands possible to be used as one serving cell (for example, band combination, combination of band numbers) as capability (information in the new UE capability information). The UE may report whether to support simultaneous DL and UL transmission and reception, as capability (information in the new UE capability information).

A combination of a plurality of DL/UL bands possible to be used as one serving cell may be defined/limited in a specification. For example, the combination may be limited only to TDD bands, may be limited only to FDD bands, may be limited only to a plurality of carriers in the same band (intra-band), or may be limited only to FR1 (Combination of bands in FR1). When a plurality of carriers in the same TDD band are used for DL and UL, simultaneous transmission and reception in the plurality of carriers may be disallowed, or whether to allow simultaneous transmission and reception using the plurality of carriers in the same TDD band may be determined based on whether to support XDD in the same carrier/band.

The UE having new UE capability described above or different new UE capability may support (may be configured with) one or more DL BWPs in a plurality of different carriers in one serving cell. At least one of the number (maximum number) of the one or more DL BWPs, the number (maximum number) of the plurality of carriers, the total of the bandwidths (maximum bandwidth) of the one or more DL/BWPs, the total of the bandwidths (maximum bandwidth) of the plurality of carriers, the bandwidth (maximum bandwidth) from the lowest frequency to the highest frequency of the one or more DL/BWPs, and the bandwidth (maximum bandwidth) from the lowest frequency to the highest frequency of the plurality of carriers may be reported as capability (information in the new UE capability information).

At a given time point in the one serving cell, one DL WBP may be active, or a plurality of DL BWPs may be active.

The above description of the DL BWP(s) may similarly be applicable to a UL BWP(s). The UE having new UE capability described above or different new UE capability may support (may be configured with) one or more UL BWPs in a plurality of different carriers in one serving cell or may support (may be configured with) one UL BWP in a plurality of different carriers in one serving cell. The UE having new UE capability described above or different new UE capability may support (may be configured with) one or more DL BWPs and one UL BWP in a plurality of different carriers in one serving cell.

At a given time point in the one serving cell, one UL WBP may be active, or a plurality of UL BWPs may be active.

### <<Combination of DL Carrier and UL Carrier>>

When a plurality of different carriers in one serving cell are used for DL and UL (plurality of carriers in one serving cell include a DL carrier and a UL carrier having different center frequencies, or one serving cell includes a plurality of carriers for TDD), the UE may follow at least one of time resource determination methods 1 and 2 below.

### {Time Resource Determination Method 1}

When simultaneous transmission and reception is disallowed (UE does not support simultaneous transmission and reception), the UE may determine time resources available in each carrier according to a single TDD UL/DL configuration (or TDD UL/DL configuration common to the plurality of carriers).

### {Time Resource Determination Method 2}

When simultaneous transmission and reception is allowed (UE supports simultaneous transmission and reception), the UE may determine time resources available in each carrier according to the TDD UL/DL configuration of each carrier. Among the plurality of carriers, TDD UL/DL configurations (link directions) at a given time point may be the same or different from each other. Alternatively, even when simultaneous transmission and reception is allowed, the UE may follow a single TDD UL/DL configuration and follow a different configuration (for example, a configuration for XDD) for whether to allow simultaneous transmission and reception in each time resource.

### <<Combination of Plurality of DL Carriers>>

When a plurality of different carriers in one serving cell are used for DL (plurality of carriers in one serving cell include a plurality of DL carriers), the UE may follow at least one of DL BWP use methods 1 and 2 below.

### {DL BWP Use Method 1}

The UE may treat a combination of a plurality of DL BWPs (for example, a plurality of DL BWPs extending over a plurality of carriers) as a single DL BWP. In the single DL BWP, a resource/channel/signal assigned over a plurality of carriers may be configured/scheduled. The resource/channel/RS may be a CORESET/PDSCH/CSI-RS or the like. The single DL BWP may be regarded as a DL BWP constituted of contiguous frequency resources in a pseudo manner. Serial indices may be given to frequency resources in the single DL BWP as frequency indices (for example, RB indices) used for scheduling of the single DL BWP. Subcarrier spacing (SCS) may be common to the plurality of DL BWPs (within the single DL BWP).

### {DL BWP Use Method 2}

A plurality of DL BWPs (set of a plurality of DL BWPs) may be active at the same time. A resource/channel/signal assigned over the plurality of DL BWPs (plurality of carriers) may be configured/scheduled. It may be defined that the UE does not assume that the resource/channel/signal assigned over the plurality of DL BWPs (plurality of carriers) is configured/scheduled. The resource/channel/RS may be (may be enclosed) in only one DL BWP. The resource/channel/RS may be a CORESET/PDSCH/CSI-RS or the like. SCS may be common to the plurality of DL BWPs. A case where SCSs are different among the plurality of DL BWPs may be permitted. A BWP switch may be operation of switching the plurality of DL BWPs to a plurality of different DL BWPs all at once. The plurality of DL BWPs may be individually activated/deactivated (on/off) one by one or may each be switched to a different DL BWP.

According to this embodiment, the UE uses a plurality of carriers (for example, not being one pair of FDD carriers (paired spectrum) and not including SUL) as a DL carrier a UL carrier in one serving cell to thereby be able to increase frequency use efficiency.

### <Second Embodiment>

The UE may be able to use (may support) a plurality of different carriers in initial access. The plurality of carriers may be included in one serving cell. The UE may receive an SSB (at least one of a synchronization signal and a PBCH) in at least one of the plurality of carriers.

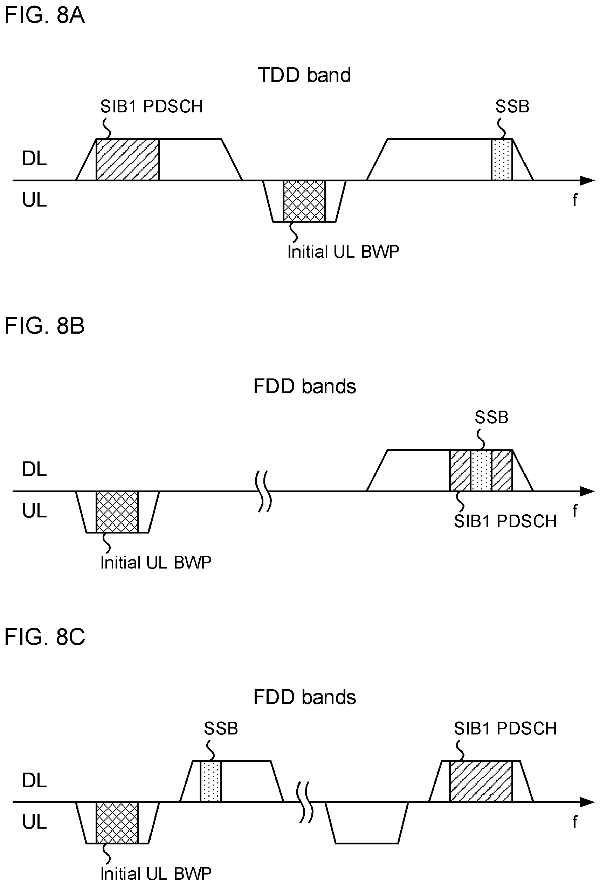

FIGS. 8A to 8C show examples of initial access using a plurality of carriers in one serving cell according to a second embodiment.

As in the example in FIG. 8A, one serving cell includes a UL carrier and DL carriers having different center frequencies in one TDD band. Here, the number of UL carriers / DL carriers in one TDD band need not necessarily be one. As in this example, one serving cell may include a first DL carrier, a UL carrier, and a second DL carrier in one TDD band. The UE may receive an SSB in the second DL carrier and receive an SIB1 PDSCH in the first DL carrier, to be indicated with an initial UL BWP in the UL carrier by SIB1.

As in the example in FIG. 8B, one serving cell includes a UL carrier and a DL carrier having different center frequencies in a plurality of TDD bands. Here, the number of UL carriers / DL carriers in one TDD band need not necessarily be one. As in this example, one serving cell may include a UL carrier in a first TDD band and a DL carrier in a second TDD band. The UE may receive an SSB and an SIB1 PDSCH in the DL carrier, to be indicated with an initial UL BWP in the UL carrier by SIB1.

As in the example in FIG. 8C, one serving cell may include UL/DL carriers in a plurality of FDD bands. As in this example, one serving cell may include a first UL carrier and a second DL carrier in a first FDD band and include a first UL carrier and a second DL carrier in a second FDD band. The UE may receive an SSB in the first DL carrier and receive an SIB1 PDSCH in the second DL carrier, to be indicated with an initial UL BWP in the first UL carrier by SIB1.

### <<Different UL Carriers in Initial Access>>

A UL carrier of a band (for example, a band defined for TDD/FDD/XDD) other than the band defined for SUL may be configured/indicated by system information (for example, SIB1).

A UL carrier (initial UL BWP) different from the carrier (center frequency) of SIB1 may be notified/broadcast by SIB1. SIB1 may provide notification of / broadcast the parameter of the initial UL BWP and NR-ARFCN/pointA of the UL carrier. Only the UE that supports the notification of the initial UL BWP may recognize the notification (the initial UL BWP). The notification of the initial UL BWP may be a mandatory function in a particular frequency range (FR) / band / resource. The UE may perform UL transmission (random access procedure or the like) in the initial UL BWP notified by SIB1.

### <<Plurality of DL Carriers in Initial Access>>

The UE may be indicated/configured to receive an SIB1 PDCCH / SIB1 PDSCH in a carrier different from the carrier in which an SSB is received. The UE may follow at least one of carrier determination methods 1 to 3 below.

### {Carrier Determination Method 1}

A plurality of band/carrier candidates may be defined in a specification. An information element / field in an MIB (PBCH) may provide notification of one of the plurality of candidates. The UE may monitor an SIB1 PDCCH (Type0-PDCCH) in the notified carrier candidate.

### {Carrier Determination Method 2}

A plurality of band/carrier candidates may be defined in a specification. A field in an SIB1 PDCCH may provide notification of one of the plurality of candidates. The UE may receive an SIB1 PDSCH in the notified carrier candidate.

### {Carrier Determination Method 3}

A band/carrier for reception of an SIB1 PDCCH / SIB1 PDSCH may be defined in a specification. Association of the band/carrier of a detected SSB and the band/carrier for the reception of the SIB1 PDCCH / SIB1 PDSCH may be defined in a specification. A derivation rule (calculation expression) of the band/carrier for the reception of the SIB1 PDCCH / SIB1 PDSCH from the band/carrier of the detected SSB may be defined in a specification. The UE may determine a carrier different from the carrier for reception of the SSB, as the carrier for the reception of the SIB1 PDCCH / SIB1 PDSCH according to the specification. The UE may receive an SIB1 PDCCH / SIB1 PDSCH in the determined carrier.

### <<Random Access Procedure in Different Carriers in Initial Access>>

The UE in an IDLE mode may be indicated/configured to perform a random access procedure (for example, transmit a random access preamble) in a carrier different from the (serving) carrier the UE is camping on.

Information related to a carrier/BWP used for the random access procedure may be notified/broadcast by SIB1. The information may be the parameter of the BWP and NR ARFCN/pointA of the carrier/BWP.

According to this embodiment, the UE uses a plurality of carriers (for example, not being one pair of FDD carriers (paired spectrum) and not including SUL) for initial access to thereby be able to increase frequency use efficiency.

### <Other Embodiments>

### <<UE Capability Information / Higher Layer Parameter>>

A higher layer parameter (RRC IE) / UE capability corresponding to a function (characteristics, feature) in each of the embodiments above may be defined. The higher layer parameter may indicate whether to activate the function. The UE capability may indicate whether the UE supports the function.

The UE for which the higher layer parameter corresponding to the function may perform the function. It may be defined that the "UE for which the higher layer parameter corresponding to the function is not configured does not perform the function (for example, follows Rel. 15/16)."

The UE which has reported/transmitted UE capability indicating that that the UE supports the function may perform the function. It may be defined that the "UE which has not reported UE capability indicating that the UE supports the function does not perform the function (for example, follows Rel. 15/16)."

When the UE has reported/transmitted UE capability indicating that the UE supports the function and the higher layer parameter corresponding to the function is configured, the UE may perform the function. It may be defined that "when the UE does not report/transmit UE capability indicating that the UE supports the function or when the higher layer parameter corresponding to the function is not configured, the UE does not perform the function (for example, follows Rel. 15/16)."

Which one of embodiments/options/choices/functions in the plurality of embodiments above may be configured by a higher layer parameter, may be reported by the UE as UE capability, may be defined in a specification, or may be determined by reported UE capability and configuration of a higher layer parameter.

According to the UE capabilities / higher layer parameters above, the UE can, while maintaining compatibility with existing specifications, implement the above-described functions.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

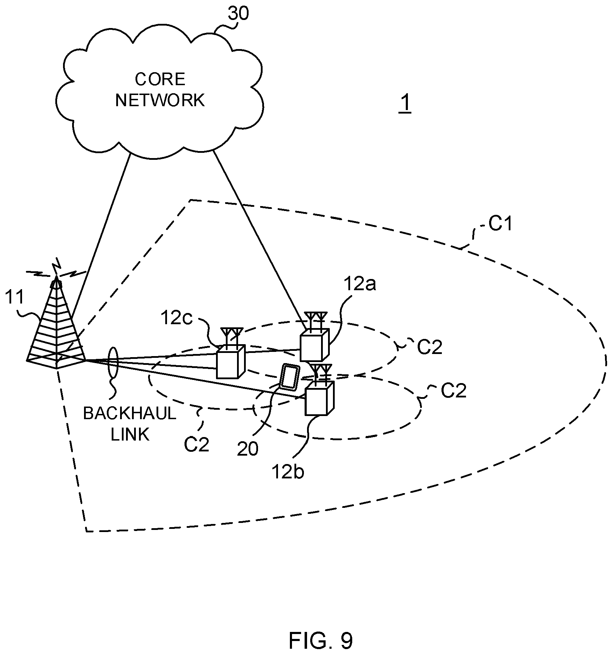

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

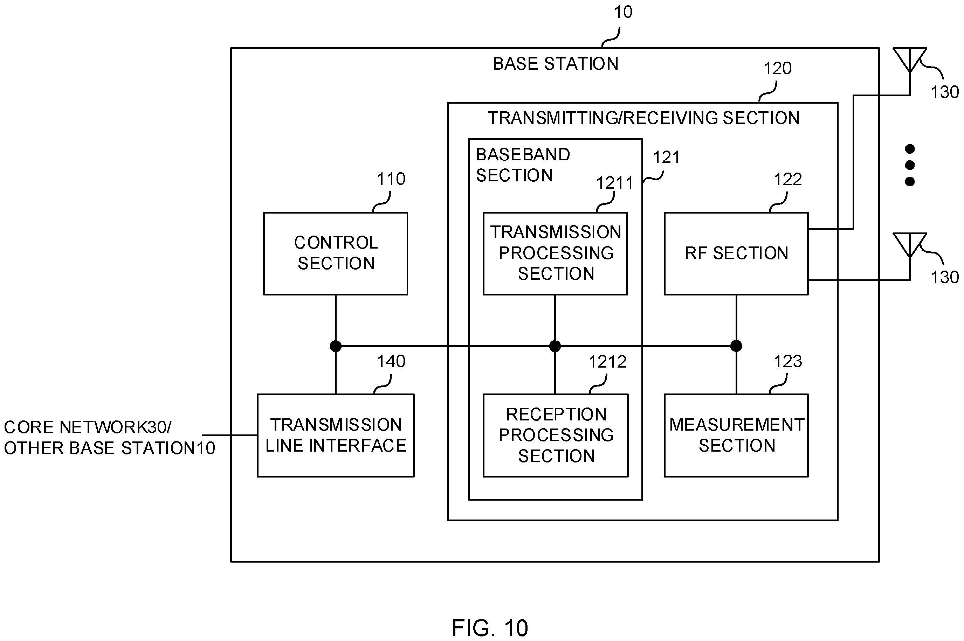

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may receive capability information indicating supporting of use of a plurality of carriers for one serving cell. The control section 110 may control at least one of transmission and reception in the one serving cell.

The control section 110 may use the plurality of carriers for initial access. The transmitting/receiving section 120 may transmit at least one of a synchronization signal and a broadcast channel in at least one of the plurality of carriers.

### (User Terminal)

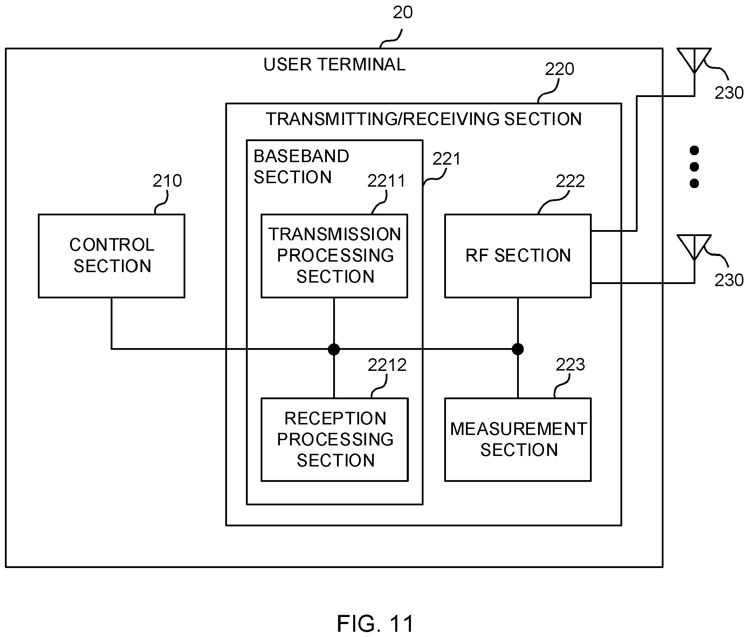

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may transmit capability information (for example, new UE capability) indicating supporting of use of a plurality of carriers for one serving cell. The control section 210 may control at least one of transmission and reception in the one serving cell.

The plurality of carriers may be included in any of one or more bands for time division duplex (TDD), a plurality of bands for frequency division duplex (FDD), and a combination of one or more bands for TDD and one or more bands for FDD.

Uplink and downlink time resources may be configured for at least one of the plurality of carriers.

The control section 210 may use one or more active downlink bandwidth parts (BWPs) extending over a plurality of downlink carriers in the plurality of carriers.

The control section 210 may use the plurality of carriers for initial access. The transmitting/receiving section 220 may receive at least one of a synchronization signal and a broadcast channel in at least one of the plurality of carriers.

The plurality of carriers may be included in any of one or more bands for time division duplex (TDD), a plurality of bands for frequency division duplex (FDD), and a combination of one or more bands for TDD and one or more bands for FDD.

The transmitting/receiving section 220 may receive a first system information block including indication of an initial uplink bandwidth part.

A carrier for reception of at least one of a first system information block and a physical downlink control channel for scheduling of the initial system information block may be different from a carrier used for reception of the synchronization signal.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatus (for example, via wire, wireless, or the like) and using these plurality of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

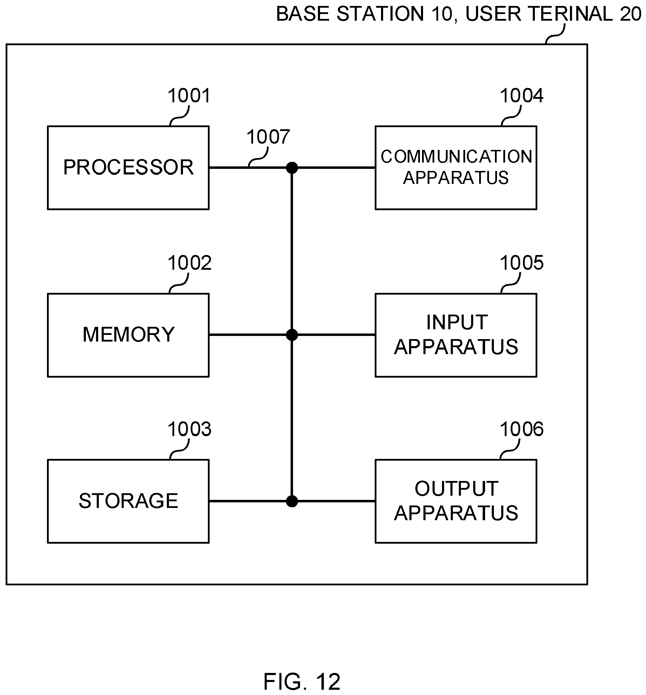

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object refers to a mobile object, of which moving speed is any speed, and also includes, as a matter of course, a case in which the moving object is stationary. For example, the moving object includes, but is not limited to, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, an airplane, a rocket, an artificial satellite, a drone, a multicopter, a quadcopter, a hot air balloon, and an object loaded on these. The moving object may be a moving object that autonomously moves based on an operation command.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

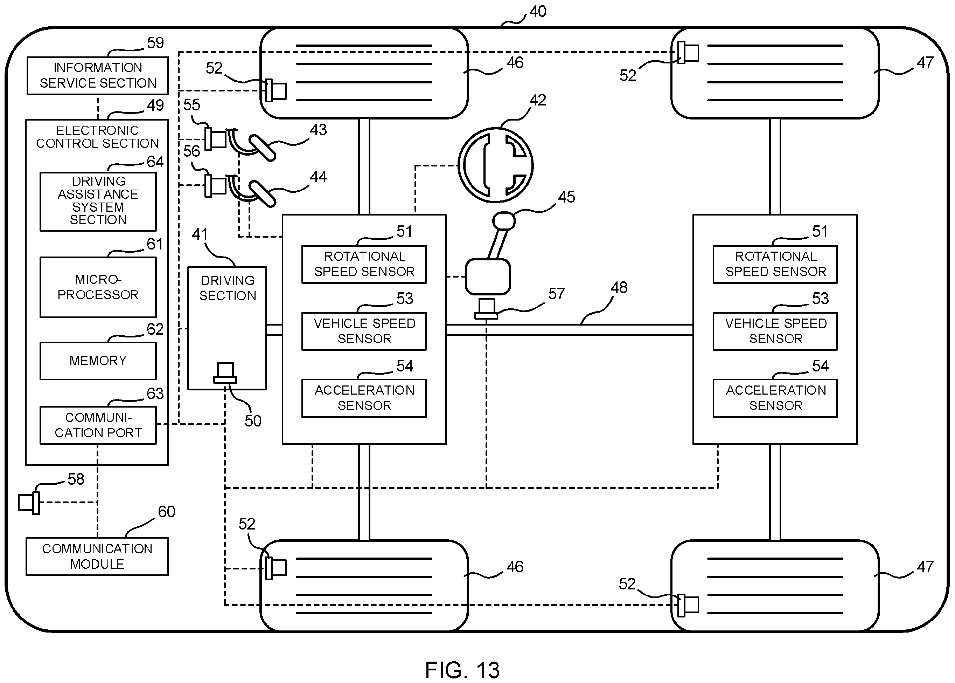

FIG. 13 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, am input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various information such as drive information, traffic information, and entertainment information, such as a car navigation system, an audio system, a speaker, a display, a television, and a radio, and one or more ECUs that control these devices. The information service section 59 provides various information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV)) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various information (traffic information, signal information, inter-vehicle distance information, and the like) transmitted from the external apparatus, and displays the various of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various information received from the external apparatus in the memory 62 that can be used by the microprocessor 61. Based on the information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on"

### ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The "maximum transmission power" described in the present disclosure may mean the maximum value of transmission power, may mean the nominal maximum transmit power (the nominal UE maximum transmit power), or may mean the rated maximum transmission power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that uses a plurality of carriers for initial access; and
a receiving section that receives at least one of a synchronization signal and a broadcast channel in at least one of the plurality of carriers.

2. The terminal according to claim 1, wherein the plurality of carriers are included in any of one or more bands for time division duplex (TDD), a plurality of bands for frequency division duplex (FDD), and a combination of one or more bands for TDD and one or more bands for FDD.

3. The terminal according to claim 1 or 2, wherein the receiving section receives a first system information block including indication of an initial uplink bandwidth part.

4. The terminal according to any one of claims 1 to 3, wherein a carrier for reception of at least one of a first system information block and a physical downlink control channel for scheduling of the initial system information block is different from a carrier used for reception of the synchronization signal.

5. A radio communication method for a terminal, the radio communication method comprising:
using a plurality of carriers for initial access; and
receiving at least one of a synchronization signal and a broadcast channel in at least one of the plurality of carriers.

6. A base station comprising:
a control section that uses a plurality of carriers for initial access; and
a transmitting section that transmits at least one of a synchronization signal and a broadcast channel in at least one of the plurality of carriers.
